(19) Europäisches Patentamt / European Patent Office / Office européen des brevets

(11) **EP 3 535 556 B1**

(12) **EUROPEAN PATENT SPECIFICATION**

(45) Date of publication and mention
of the grant of the patent:
**07.07.2021 Bulletin 2021/27**

(21) Application number: **17822797.1**

(22) Date of filing: **07.11.2017**

(51) Int Cl.:
*F02D 35/02* (2006.01)     *G01L 23/06* (2006.01)
*G01L 11/02* (2006.01)     *G01L 9/00* (2006.01)
*G01M 15/08* (2006.01)

(86) International application number:
**PCT/NL2017/050717**

(87) International publication number:
**WO 2018/084711 (11.05.2018 Gazette 2018/19)**

(54) **COMBUSTION PRESSURE SENSOR AND ITS ASSEMBLY IN AN ENGINE COMPONENT OF AN INTERNAL COMBUSTION ENGINE**

VERBRENNUNGSDRUCKSENSOR UND DESSEN ANORDNUNG IN EINER MOTORKOMPONENTE EINES VERBRENNUNGSMOTORS

CAPTEUR DE PRESSION DE COMBUSTION ET SON ASSEMBLAGE DANS UN COMPOSANT DE MOTEUR D'UN MOTEUR À COMBUSTION INTERNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2016 NL 1042133**

(43) Date of publication of application:
**11.09.2019 Bulletin 2019/37**

(73) Proprietor: **Nooijen, Paul Johan Willem Maria 5342 NM Oss (NL)**

(72) Inventor: **Nooijen, Paul Johan Willem Maria 5342 NM Oss (NL)**

(74) Representative: **V.O.
P.O. Box 87930
2508 DH Den Haag (NL)**

(56) References cited:
**WO-A1-98/35210     US-A- 5 146 083
US-A- 6 131 465     US-A1- 2004 031 326**

## Description

## TECHNICAL FIELD

The invention relates to an improved combustion pressure sensor using optical fibre technology, and being in particular adapted to detect the combustion pressure in an internal combustion engine. The invention also relates to a combustion engine equipped with the improved combustion sensor.

## BACKGROUND

Combustion pressure sensors enable to achieve excellent engine control with a minimum of sensors. The combustion pressure sensor can provide information about the combustion directly from the combustion chamber. Such information includes effects of ignition timing, of valve timing, and supply of energy, but would also enable detection of engine damage hazards, like auto-ignition, engine knock, blow-by, exceeding of maximum combustion pressure ($P_{max}$) or exceeding of too much pressure rise per crank angle $D_p/da$.

Known combustion pressure sensors, such as those available from Optrand and described in US 6,131,465 can however only withstand a limited working temperature at the risk of the fixation or connection between their optical fibre and the body of the sensor becoming damaged. The maximum temperature allowed by the glass bond is at best 510 °C or lower, which requires a sensor tip temperature not to exceed a temperature of 510 °C. The prevention of soot fouling of the sensor tip would require a temperature of at least 535 °C, while in practice the sensor tip could well become exposed to combustion temperatures of up to 800 °C. Another disadvantage of the known combustion pressure sensors is their sensitivity to temperature variations, known as thermo-shock. This sensitivity to temperature changes distorts the pressure measurements in a rather unpredictable manner. A still further disadvantage of the known combustion pressure sensors is their insufficient resistance to engine knock, knock results in a raise of temperature with an easy 10.000°C. As a result of these disadvantages, the known combustion pressure sensors have only seen limited use in engine research, and on test bed engines but not successfully in the field unfortunately.

Known combustion pressure sensor that are sufficiently small, e.g. 2.5 mm in diameter, to be build in into engine components, e.g. injectors or glowplugs, are not proven to be suitable for continuous usage. Larger diameter combustion pressure sensors, with diameters e.g. larger than 5 mm, are more reliable, but have the drawback of having the large diameter. Furthermore, some type combustion pressure sensors had to be equipped with a liquid cooling system. No such sensors have yet proven suitable for continuous use on commercially produced internal combustion engines as part of an engine management system.

US 5,146,083A fibre optic microphone is provided for measuring fluctuating pressures. An optical fibre probe having at least one transmitting fibre for transmitting light to a pressure-sensing membrane and at least one receiving fibre for receiving light reflected from a stretched membrane is provided. the microphone comprises one centrally located transmitting fibre and six surrounding receiving fibres.

## SUMMARY

It is hence an object of the present invention to provide an improved combustion pressure sensor according to claim 1 that can be used as part of an engine management system in commercially produced and operated internal combustion engines. Another object of the present invention is to provide a method of determining a temperature in a cylinder of a combustion engine by means of a combustion pressure sensor according to claim 1 and to provide a computer software according to claim 9 to execute the method according to claim 8. Further, another object of the present invention is to provide a method of controlling operation of an internal combustion engine according to claim 10, using the method of claim 8.

In particular a combustion pressure sensor in accordance with the invention can comprise a sensor body, at least one first optical fibre inserted into the sensor body, and a resiliently deformable membrane attached to the sensor body, the membrane having a reflective surface, wherein the at least one first optical fibre is arranged for allowing measuring of a pressure induced deflection of the resiliently deformable membrane, wherein an end of the at least one first optical fibre module is connected to the sensor body to guide a light beam to the reflective surface and to guide the reflected light, at least one second optical fibre module is inserted into the sensor body to guide a light beam to the reflective surface and to guide the reflected light, the at least one second optical fibre module is arranged for allowing detection of a temperature induced thermal expansion of the resiliently deformable membrane to enable temperature correction of pressure related values obtained by the at least one first optical fibre module, the first optical fibre module is positioned centrally with respect to the resiliently deformable membrane; and the second optical fibre module is positioned adjacent to an outer edge of the resiliently deformable membrane.

The at least one first optical fibre "set" can be arranged for allowing measuring of a pressure induced deflection of the resiliently deformable membrane, and an end of the at least one second "set" optical fibres can be connected to the sensor body in a manner that withstands temperatures within a temperature range hot enough to regenerate soot depositions on the resiliently deformable membrane, yet cool enough to prevent melting of the resiliently deformable membrane. The temperature range of such a combustion pressure sensor can be between 540 °C and 750 °C. The sensor body can optionally be made of a material having a relatively low expansion coefficient lower than $\alpha6$ (*10-6m/m K-1). In order to expand minimum in relation to the fibre that is made from Quartz, the body therefore could be made from Kovar (low Coefficient of Thermal Expansion "CTE" Stainless Steel), Quartz or Ceramic material.

In the combustion pressure sensor the at least one first optical fibre can be connected to the sensor body by either Soldering or Brazing, by using for example a vacuum furnace or non vacuum and induction and or Handy Hi Temp Flux, and Vacuum Brazing Paste HF350/60-521/90BI which can both be delivered by www.lucasmilhaupt.com, bonding, cementing like Ceramabond that can be delivered by www.aremco.com, or press fitting.

Also the manner of connecting the at least one first optical fibre to the sensor body can be effective to resist disconnection under temperature induced expansion and contraction.

Optionally, the end of the at least one first optical fibre can be connected to the sensor body by at least one ferrule. In that regard the end of the at least one first optical fibre can also be connected to the sensor body by a pair of ferrules oppositely engaging a portion of the sensor body. In connection with these options the at least one ferrule can be made of a material having a relatively low expansion coefficient, including either quartz or ceramic.

Alternatively the end of the at least one first optical fibre can also be connected to the sensor body by a cutting ring, which is arranged to cut only in a fibre coating, and not in the fibre itself. Either one of the optional connections of the end of the at least one first optical fibre to the sensor body can also be combined with the connection being arranged to put the connected end under tension, which can be accomplished by a spring.

In case the combustion pressure sensor can be placed cold enough than optionally a polyamide coated fiber can be connected to the ferule or body by for example polyamide injection moulding.

In any combustion pressure sensor with one or more of the abovementioned features, at least one second optical fibre can be inserted into the sensor body, and then the at least one second optical fibre can be arranged for allowing detection of a temperature induced thermal expansion of the resiliently deformable membrane to enable temperature correction of pressure related values obtained by the at least one first optical fibre. In such a combustion pressure sensor the at least one first optical fibre can be positioned centrally with respect to the resiliently deformable membrane, while the at least one second optical fibre can be positioned adjacent to an outer edge of the resiliently deformable membrane. Then the at least one second optical fibre can be one of a second pair of optical fibres, while one optical fibre of the second pair emits light, and the other optical fibre of the second pair allows measuring of an intensity of light reflected by a reflective surface on the outer edge of the resiliently deformable membrane.

In a combustion pressure sensor according to the invention the at least one first optical fibre can be one of a first pair of optical fibres, while one optical fibre of the first pair emits light, and the other optical fibre of the first pair allows measuring of an intensity of light reflected by a reflective surface on a central part of the resiliently deformable membrane. In this configuration, at least one end of each of the optical fibres comprised by the first pair is placed at a distance of the reflective surface to allow the reflected light to be reflected in one of the optical fibres.

In a combustion pressure sensor according to the invention the at least one first optical fibre alternatively can be arranged for optical beam splitting. The optical beam splitting can then be obtained by a dialectic mirror in accordance with a Fabry-Pérot measuring principle, and cause a difference in paths of interference.

As a further alternative the at least one first optical fibre can also be arranged for detection of changes of optical fibre length, by using a Fibre Brag Grating (FBG) measuring principle. In order to use the fibre Brag Grating measuring principle, the at least one optical fibre comprises multiple segments / lenses of which at least one optical transmission factor is arranged to change as a result of changes in strain in the at least one first optical fibre. The optical transmission factor is in one embodiment of the at least one first optical fibre the refractive index. The refractive index is different for different wavelengths of light. When the strain in the segments changes, an absolute change in the refractive index occurs, which in turn can be measured. From this measurement the strain in the segment can be determined. As the strain in the segments are a result of deformation of the flexible membrane, to which an end of the at least one first optical fibre is attached, the deformation of the flexible membrane at the point to which the at least one first optical fibre is attached can be determined. The other end of the at least one first optical fibre is attached at another point, such that the at least one first optical fibre length can only change due to deformation of the flexible membrane to which it is attached.

An internal combustion engine in accordance with the invention can include at least one combustion pressure sensor with one or more of the above features. In such an internal combustion engine the at least one combustion pressure sensor can be positioned with its resiliently deformable membrane in direct contact with a surrounding body of an engine component for possibly direct transfer of heat to the surrounding body. The engine component can either be a fuel injection device or a cylinder head or any other engine part.

In a further embodiment of the internal combustion engine of the invention the resiliently deformable membrane can be separated from a combustion chamber of the internal combustion engine by a channel in the engine component. Such a channel can have a length that is selected to commensurate with the working temperature range of the resiliently deformable membrane. Furthermore a heat shield can be positioned within the channel at a location interposed between the combustion chamber and the resiliently deformable membrane.

Another variation of the internal combustion engine of the invention can further include an engine management control system that is connected to the at least one combustion pressure sensor for governing operation of the engine in commercial use. When in at least one second optical fibre is included in the at least one combustion pressure sensor, with the at least one second optical fibre arranged for allowing detection of a temperature induced thermal expansion of the resiliently deformable membrane, and the engine management control system can then be adapted to calculate temperature correction of pressure related values obtained by the at least one first optical fibre. The engine management control system further comprises a first light source, arranged to provide a first light beam to the at least one first optical fibre. Also comprised by the engine management control system is a first light sensor, arranged to receive a reflected part of the first light beam. When provided with at least one second optical fibre, the engine management control system is arranged to determine a temperature difference between multiple locations of the resiliently deformable membrane. To provide the second optical fibre with a light beam, a second light source and a second light sensor are provided in the engine management control system.

Another feature of the invention is the ability to measure, in real-time, the temperature in the cylinder. This information can be used to optimise temperature losses in the engine and therewith increase engine efficiency.

The combustion pressure sensor of the invention can use the working principle of optical fibre technology to measure intensity of light reflected by a deformable membrane to record bending of the membrane caused by pressure variations. The temperature of the membrane is controlled by design of the sensor and its mounting in a surrounding engine component to be, in use, above a value of 540 °C to counteract / regenerate deposition of soot on the membrane, and below a maximum temperature value of 750 °C to prevent damage to the membrane. This working temperature range is made possible by a fixation of the optical fibre that can withstand these elevated temperatures. Furthermore the combustion pressure sensor is optionally mounted with its membrane in direct contact with a surrounding engine component, rather than that the heat of the membrane has first to dissipate via the sensor body before reaching the engine component, this to shortcut the distance for dissipating the heat.

An other way to shortcut the heat transfer from the membrane to the coolant of the engine is to introduce a airgap on the nose of the ferule in order to isolate the ferule and give enough material around it to transfer this heat.

One aspect is that the temperature to which the membrane of the combustion pressure sensor becomes exposed is adapted to the required working range of temperatures. If the temperature of the membrane would get below a value of 540 °C it will become contaminated by soot and measurements will become inaccurate or become inhibited altogether. When during maximum power operation of the internal combustion engine the membrane of the combustion pressure sensor would get to its upper temperature limit, occurrence of detonation or engine knock could easily result in destruction of the membrane. It is therefore important that the temperature to which the membrane of the combustion pressure sensor is exposed does not exceed a maximum of 750 °C to remain sufficiently robust. Hence the benefit of an improved heat transfer cooperation between the sensor and the surrounding body, such as cylinder head or injector body in which it is mounted.

This aspect thus also relates to the combination of the sensor and its surrounding body, and the features relating to temperature control also work together to enable continuous use of the sensor of the invention in conjunction with an engine management control unit. Additional cooling of the sensor may be obtained by locating it in proximity of cooling water passages or fuel delivery conduits. In air cooled combustion engines a location close to nearby cooling ribs can be selected.

Other parameters, such as material properties, or distance from the heat source, can also be varied to obtain the best possible membrane surface temperature range for the combustion pressure sensor. Under particular engine operating conditions it is also conceivable that the cooling water temperature, or the combusted mass of the internal combustion engine are adjusted to prevent damage to the combustion pressure sensor, or to keep it within its optimal working temperature range. To be able to operate at a temperature higher than 540 °C, it is important that the connection between any fibre and the sensor body can withstand such a temperature.

The surrounding body can be formed by different materials, such as aluminium or cast iron (cylinder heads), or steel (injector body or separate adapter). A separate adapter for mounting the combustion pressure sensor in an internal combustion engine can also include a spark plug or a glow plug. Important is that the membrane of the combustion pressure sensor can dissipate heat to its surrounding body as directly as possible. A heat shield can also be applied to reduce the heat to which the membrane is directly exposed.

It is the main purpose of this invention to make a combustion pressure sensor that does not need a heatshield. A Heatshield lowers the thermos-shock. But the combustion pressure sensor does not need that because it takes away the thermos-shock. It does so by means of the second fibre "set" with the two fiber sets its possible to calculate the deflection coming from the heat change of the membrane and the deflection coming from the pressure on the membrane. This is done by the principle that you now have two equations with two unknowns and this is mathematically solvable. The big disadvantage of the heatshield is soot clogging problems that give the sensor a too short life <3months to use in an application outside a engine laboratory. So the only reason to mention a heatshield is not to exclude the option to use one as a plan B for new upcoming situations in the future.

Another aspect of the invention is related to fixation of the optical fibre to the sensor body, which is also sensitive to temperature. The temperature per cycle in a combustion chamber of an internal combustion engine can vary between 0 °C and 10,000 °C, depending on the type of engine. Even in the sheltered environment selected for the combustion pressure sensor this means that the connection of the optical fibres to the sensor body should also be able to follow quickly changing temperature extremes without endangering the bond between fibre and sensor body. This bond could be endangered when the bonding material disintegrates, or when the expansion coefficient of the optical fibre is greatly different from the material of the sensor body.

If the optical fibre becomes detached from the sensor body, its position with respect to the membrane will become undefined causing the sensor readings to be useless. The invention proposes a sensor body of a material having a relatively low expansion coefficient, such as quartz or ceramic material. Preferably the expansion coefficient is lower than $\alpha6$ (*10-6m/m K-1) to ensure that the optical fibres are robustly fixed in the sensor body.

Alternatively or additionally the invention proposes the use of ferrules to fix the optical fibre with respect to the sensor body. Such ferrules also can be made of a material having a low expansion coefficient, such as quartz or ceramic material. Also soldering, brazing, gluing, injection moulding or even press fit connections may then be employed without risk of working loose as a result of changing temperatures.

The thermo-shock problem is solved by enabling membrane deformations caused by heat to be distinguished from membrane deformations caused by pressure. Conventional combustion pressure sensors show thermo-shock sensitivity of up to 30%, especially when a heatshield is not been used. The invention proposes to measure both the enlargement of the membrane caused mainly by a raise in temperature, as well as the bending of the membrane caused mainly by a change in pressure. The obtained measuring value can then be used to calculate the actual pressure value. An extra set of optical fibres can be used to measure the membrane enlargement or expansion caused by heat.

While one optical fibre may solely be used to guide a light beam to a reflective surface of the sensor membrane, and another to guide the reflected light beam, it is also possible to use a single optical fibre to detect membrane deformation. This can be achieved by using optic beam splitting, or by using Piezo, Fabry-Pérot or Fibre Bragg Grating (FBG) measuring principles.

Alternatively the optical fibre or optical fibres can be attached to the sensor body by clamping. While fixation by brazing or soldering may initially be preferred because it is both robust and small, a variety of other fixation options may nonetheless be successfully employed. One option is a cutting ring akin to those in use with pipe connections and fittings. It is also possible to tension the optical fibre between two ferrules, either by means of a spring or by bringing the optical fibre itself in a pre-tensioned state. The ferrules can be fixed to the optical fibre by soldering, by clamping, or by melting of the optical glass fibre. When a cutting ring is used, it is preferred that this only cuts into the coating of the optical fibre.

Yet another aspect of the invention is to control the temperature of the combustion in at least one cylinder of an internal combustion engine as a combustion room during combustion. It is known that during combustion of a combustible in an internal combustion engine $NO_x$ may be formed and $CH_4$ (methane) may not be burned completely. It is an objective of this invention to optimize the temperature of combustion in the internal combustion engine to minimise emissions like $NO_x$, , $CH_4$ or any other emission like CO and THC .

Experiments have shown that if the temperature of combustion exceeds 1500 °C, the $NO_x$ emissions increases significantly. Experiments have further shown that if the temperature of combustion becomes below 1300 °C, the $CH_4$ emissions increases significantly. It is therefore preferred to improve control the combustion process in an internal combustion engine to keep the combustion temperature within a specific range.

A control module is used to control different engine parameters based on information provided by sensors provided at or in the cylinder. The information provided comprises at least one of a pressure inside the cylinder, an available volume in the cylinder for fuel and oxygen, a temperature in the cylinder, an amount of injected fuel, or any other engine parameter.

The control module is arranged to calculate the theoretical combustion temperature out of pressure measured in the cylinder corrected for the real volume knowing the piston position it is also possible due to this invention to directly calculate the combustion temperature by the temperature value of the CPS membrane given by the CPS affect at least one of an air-to-fuel ratio (lambda), an ignition timing, an amount of fuel injected, and an amount of times fuel is injected for one combustion cycle. In this context, air is to be understood as a mixture of approximately one fifth of oxygen ($O_2$), four fifths of nitrogen ($N_2$) and small amounts of other gases.

A first method of obtaining the temperature inside the cylinder is by estimating the temperature using the ideal gas equation:

$$\frac{PV}{T} = k$$

wherein P is the pressure inside a cylinder, V is a volume inside a cylinder available for fuel and air, T is a temperature inside the cylinder, and k is a constant depending on matter occupying the volume in the cylinder.

The pressure inside the cylinder can be obtained from the combustion pressure sensor, the volume can be derived from cylinder parameters such as a bore, a stroke, and a crank shaft angle. The constant k can be derived from a known air-to-fuel ratio and an amount of fuel injected in the cylinder.

The ideal gas law will only give a global temperature inside the cylinder and disregards local temperature variations inside the cylinder, which may result in temperatures lower or higher than the global temperature. For homogenous combustion principles like Homogeneous Charge Compression Ignition (HCCI) and Reactive Controlled Compression Ignition (RCCI), this approximation suffices in being accurate enough to provide a temperature value that can function as a feedback control parameter to continually optimise and monitor emissions of the engine. In RCCI, a first combustible is introduced in a cylinder along with a pre-determined amount of oxygen or air and optionally a pre-determined amount of recirculated exhaust gases.

The first combustible is allowed to mix with the oxygen and optional exhaust gases. Next, a second combustible is introduced in the cylinder, wherein the second combustible ignites at a lower pressure as the first combustible. Single or multiple injections of second combustible may be performed, and the second combustible is ignited due to a high pressure inside the cylinder. The combustion of the second combustible acts as a spark to ignite the first combustible.

Another method of obtaining the temperature inside the cylinder is by comparing the deflection of the resilient membrane measured by at least one of the first fibre module and second fibre module. Values may be used to compensate detected pressure and in just the same way to provide an indication of the temperature.

Because the combustion inside the cylinder when using RCCI is very homogenous, the temperature differences inside the cylinder during combustion will be relatively small, compared to conventional spark-ignition (SI) or compression ignition (CI) engines. Due do the relatively small temperature range inside the cylinder aimed to be achieved, the approximation of the combustion temperature using the ideal gas law is sufficient for accurate control of said temperature in the cylinder.

One of the control parameters for controlling the temperature during combustion inside the cylinder is identified as being the ignition timing. This timing can, for example, be expressed in terms of degrees crank shaft angle. E.g., an increase of 0.1 degrees crank angle in ignition timing can increase combustion temperature with 300 °C.

A method of controlling operation of an internal combustion engine can be used to control the temperature inside a cylinder during combustion. In this method, first an obtained temperature during combustion is compared to a pre-determined temperature range. If the obtained temperature is found to be below the pre-determined temperature range, the method may bring forward a moment of triggering of the combustion in a subsequent combustion stroke. Alternatively, if the obtained temperature is found to be above the pre-determined temperature range, the method may delay the triggering of combustion in a subsequent combustion stroke.

The obtaining of the combustion temperature in a first combustion stroke, and using said obtained temperature to adjust certain parameters of the subsequent combustion stroke, may form a closed control loop for controlling the combustion temperature in the cylinder.

The delay of the triggering of combustion comprises at least one of delaying a moment at which the second combustible is injected, and reducing an amount of second combustible provided to the cylinder. The bringing forward of the triggering of combustion comprises at least one of bringing forward a moment at which the second combustible is injected, and increasing an amount of second combustible.

The moment at which the second combustible is injected and the amount of second combustible provided to the cylinder may be controlled by the control module, wherein in the control module an optimisation algorithm may be used to calculate an optimal combination of moment of injection and amount of combustible to be injected to achieve the desired combustion temperature. The algorithm may be provided with calibration data specific to the engine or cylinder. Additionally or alternatively, the algorithm may be provided with know information on properties of the second combustible, such as a flash point, density, lowest auto-ignition temperature, stoichiometric combustion ratio, any other relevant property, or any combination thereof.

The second combustible may be injected in one, two or more stages. In different stages, equal or different amounts of second combustible may be injected into the cylinder. In particular a second or further injection is provided for triggering the combustion. When the second combustible is injected in two stages, the delay of the moment at which the second combustible is injected comprises delaying the second injection stage relative to the first injection stage. Furthermore, when injecting the second combustible in two stages, the bringing forward of the moment at which the second combustible is injected comprises bringing forward the second injection stage relative to the first stage.

The combustion may be triggered by injecting a second combustible in the cylinder, wherein the second combustible preferably is one of a compression ignition type, e.g. Diesel. Additionally, the combustion may be triggered by increasing the pressure in the cylinder wherein the second combustible is provided to such a pressure that the second combustible is ignited. The ignition of the second combustible is furthermore related to the temperature inside the cylinder in which the second combustible is provided.

In an alternative method of controlling operation of the internal combustion engine, the obtained temperature may fall within the pre-determined temperature range. In such a case, the control method may be aimed at controlling the temperature to a preferred temperature within the pre-determined temperature range by using any of the abovementioned methods of controlling the temperature during combustion, any other control method, or any combination thereof.

Another control parameter for controlling the temperature during combustion inside the cylinder is an air-to-fuel ratio (lambda) inside the cylinder during combustion. The lambda can be controlled by measuring the composition of the exhaust gas and by controlling the amount of fuel provided to the cylinder to be combusted.

**BRIEF DESCRIPTION OF THE DRAWINGS**

Further advantageous aspects of the invention will become clear from the appended description and in reference to the accompanying drawings, in which:

Figure 1: shows a schematic transverse cross section of a combustion pressure sensor assembly mounted in an engine component;

Figure 2: shows a detail showing an alternative fixation of an optical fibre using a pair of ferrules, in such a way that the pre-tensioning of the fiber works as a spring to keep the fiber in place;

Figure 3: shows a detail showing another alternative cutting ring fixation of an optical fibre;

Figure 4: shows a schematic transverse cross section of another embodiment of pressure sensor assembly mounted in an engine component;

Figure 5: shows a schematic transverse cross section of a combustion pressure sensor using an alternative Fibre Bragg Grating measuring principle; and

Figure 6: shows a partial schematic transverse cross section of a combustion pressure sensor using an alternative Fabry-Pérot measuring principle.

Figure 7 A: shows a cross section of a first practical sensor;

Figure 7 B: shows a close-up of the cross section of a first practical sensor;

Figure 8 A: shows a cross-section of a second practical sensor; and

Figure 8 B: shows a close-up of the cross-section of a second practical sensor; and

Figure 9: shows a schematic overview of a motor management system comprising a combustion pressure sensor

Figure 10: shows a method for controlling operation of an internal combustion engine

**DETAILED DESCRIPTION**

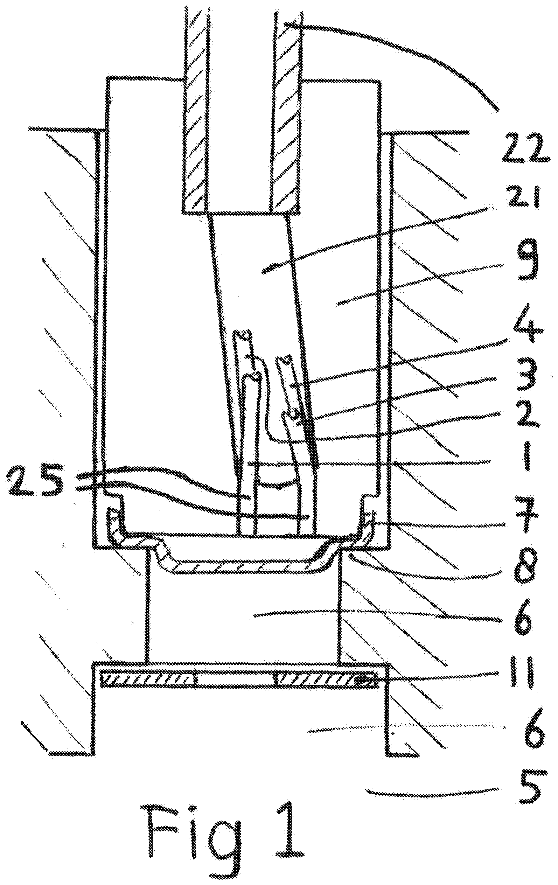

In a transverse cross section Figure 1 schematically shows a combustion pressure sensor assembly mounted in a surrounding engine component mounting structure 8. In this example the engine component mounting structure 8 can be either a cylinder head or a body of a fuel injector of an internal combustion engine or any other engine part like a spark plug or glow plug. The combustion pressure sensor (CPS) has a sensor body 9, which conveniently can be made from a material like quartz, a ceramic material, or Kovar a low CTE stainless steel. Within the sensor body 9 optical light transmitting fibres 1, 2, 3, 4 are arranged with their ends facing a deformable membrane 7.

A first central optical fibre 1 and a second central optical fibre 2 are positioned to detect a bending of the deformable membrane 7 that is mainly due to pressure variations, and only to a small extent due to temperature changes.

A first outer side edge optical fibre 3 and a second outer side edge optical fibre 4 are positioned to detect enlargement at the outer edge of the deformable membrane 7 that is mainly due to temperature gain and only to a minor extent due to pressure variations. Values obtained from the pairs of central optical fibres 1, 2 and outer side edge optical fibres 3, 4 can then be compared using the burning gas temperature within the cylinder to eliminate the effect of thermo-shock, by calculation. Due to the construction of the membrane 7 and the different locations of the central optical fibres 1, 2 and outer side edge optical fibres 3, 4, the central optical fibres 1, 2 and outer side edge optical fibres 3, 4 detect a different deformation for the same pressure as a result of the thermo-shock. Based on this difference in deflection or deformation, an effect of temperature on the deformation may be determined and with that, an effect of the temperature on the sensed pressure may be determined. Alternatively or additionally, with the effect of the temperature on the deformation determined, also the temperature in the cylinder, for example during combustion, may be determined.

This results in a reliable value of the combustion pressure, which is a parameter that enables to control the combustion process in an engine in a novel way for optimal efficiency, reliability, power and emissions. At the same time also the temperature course in the cylinder is measured, which can be used to calculate temperature losses which enables to raise efficiently. The membrane 7 is shown as a generally domed structure convexly directed towards the source of combustion pressure. Nonetheless it would also be possible to inverse the position of the membrane, so that its domed structure is concavely directed towards the source of combustion pressure. In this proposed inverse position of the membrane 7 its domed structure when thermally expanding would be more closer to the optical fibre end or tip in the sensor body, rather than moving away therefrom. Depending on the particular construction of the combustion pressure sensor compensation for expansion of the membrane 7 may be found in other components to expand in an opposite direction.

As can also be seen in Figure 1 the location to which reference numeral 8 of the surrounding mounting structure points, is an inwardly directed circumferential ridge contracted by the outer periphery of the membrane 7. At this location the membrane 7 can directly transmit its heat to the surrounding structure 8 in such a way that there is no heat transfer barrier to be considered. The inwardly directed ridge of the surrounding structure 8 also forms a channel 6 between a combustion chamber 5 of an engine and the membrane 7 of the combustion pressure sensor. A heat shield 11 can optionally be positioned within the channel 6 to further reduce the temperature to which the membrane 7 will be exposed.

Further it is illustrated in Figure 1 that soldered ends 25 of the outer side edge pair of optical fibres 3, 4 for temperature correction are positioned eccentrically with respect to the soldered ends 25 of the centre pair of optical fibres 1, 2 for measuring combustion pressure. The connection of the fibre ends 25 is orthogonal with respect to the lower face of the sensor body 9. An inclined channel 21 within the sensor body 9 enables the optical fibre 1, 2, 3, 4 to be positioned in this manner. A socket 22 centrally soldered into the sensor body 9 has an inner diameter suitable to guide and retain the optical fibres 1, 2, 3,4 outwardly of the combustion pressure sensor.

In the embodiment of Figure 1 as explained the optical fibres 1, 2, 3, 4 are fixed to the sensor body 9 by soldering or cementing.

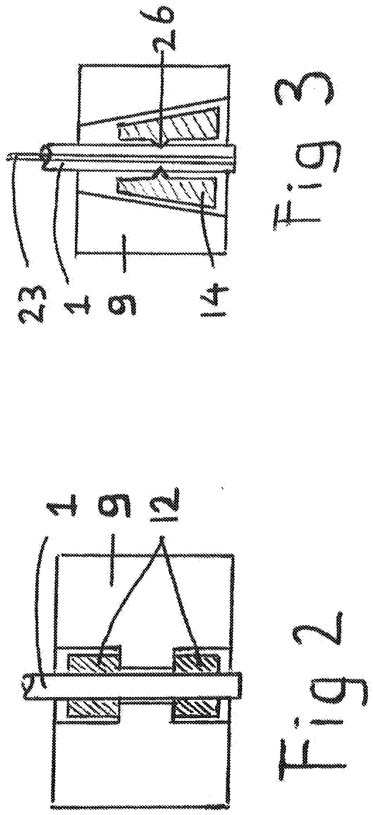

Alternatively as shown in Figure 2 the optical fibre, such as the first central optical fibre 1, can also be held in position with respect to the sensor body 9 by a pair of ferrules 12 opposite of a reduced diameter portion of the sensor body 9. The ferrules 12 is made of a material having a low expansion coefficient, such as quartz or ceramic material.

In an additionally envisioned embodiment of the pressure sensor assembly, a separation gap may be provided between a distal end of the ferrule and the sensor body. This separation gap may be established by narrowing an outer diameter of the ferrule at the distal end of the ferrule. Alternatively or additionally, an inner diameter of a bore in the sensor body increases towards the distal? end. The decrease of the outer diameter of the ferrule and/or the increase of the inner diameter of the bore in the sensor body may be stepwise, continuous, monotonous, linear, staggered, other, or a combination thereof. In one embodiment, the gap between the ferrule and the sensor body is at least partially and optionally fully filled with brazing paste and in another, the gap is left open.

In another embodiment, the circumferential gap provided in the sensor is only provided in the sensor body. In this embodiment, a central part of the body in which a bore is available through which fibres are provided, either surrounded by a ferrule or not, extends to the distal end. Between the sensor body part directly adjacent to the bore and an outer part of the sensor body, a circumferential separation gap is provided.

This separation gap is arranged to provide a thermal barrier between the sensor body and the fibres, and the membrane and the fibres. The separation gap may be filled with air, vacuum, or an isolating material like ceramic, wherein the material has a higher thermal resistance than the material comprised by the sensor body, The separation gap is provided circumferentially around the fibres, such that the effect of the combustion heat on fibre temperature can be kept as low as possible.

Also as shown in Figure 3, a cutting ring 14 in a conical bore of the sensor body 9 can be used to keep each of the optical fibre ends in position with respect to the sensor body 9. The cutting ring 14 has an inwardly directed cutting edge 26 which only grips a coating of the optical fibre, such as that of the first central optical fibre 1. As schematically illustrated in Figure 3, the uncoated portion 23 of the fibre 1 is smaller than the coated fibre.

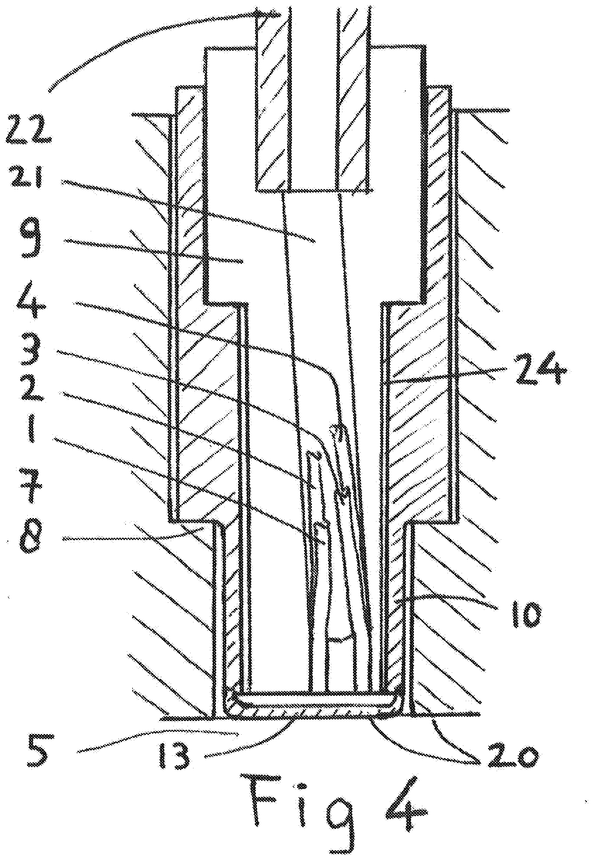

Now reverting to Figure 4 there is illustrated another embodiment of pressure sensor assembly mounted in a surrounding engine component 8, again in a schematic transverse cross section. Here the sensor body 9 holding the centre optical fibres 1, 2 and outer edge optical fibres 3, 4 is mounted in a steel sleeve 10. The steel sleeve 10 being mounted in the surrounding structure 8 of an appropriate engine component. In this embodiment a deformable membrane 13 is mounted flush with a surface of the combustion chamber 5, as indicated at reference numeral 20. The membrane 13 is welded to the steel sleeve 10. The welding of the membrane 13 to the steel sleeve 10 can be completed by a heat treatment to reduce tensions and/or to obtain a fine grained structure of the membrane. The quartz body 9 can be connected to the steel sleeve 10 in a variety of ways, for example by pressing against each other, or by a folding seam on the sleeve 10 to hold the sensor body 9.

A thermic gap 24 is provided between the sensor body 9 and the steel sleeve 10.

Common to the embodiments of Figures 1 and 4 is the inclined channel 21 in the sensor body 9, and the socket 22, which can be made out of stainless steel, for guiding and holding the centre pair of combustion pressure measuring optical fibres 1, 2 and the outer edge pair of temperature correction optical fibres 3, 4. One of the optical fibres of each pair is used solely for guiding an emitted light beam to the reflective surface of the membrane 7, while the other optical fibre of each pair guides the light reflected from the reflective membrane surface. Alternatively it would also be possible to arrange only a single light emitting optical fibre in-between a central pressure detecting optical fibre and an outer edge temperature correction optical fibre. Such an alternative arrangement of optical fibres would result in a total of three optical fibres.

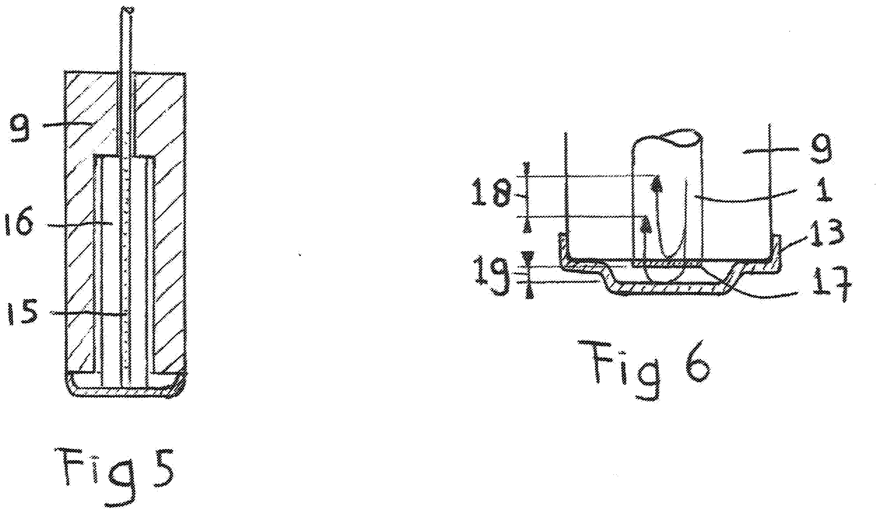

As shown schematically in Figures 5 and 6 it is alternatively possible to obtain the measurements by using only a single optical fibre for measuring pressure, and similarly another single optical fibre for temperature correction.

Figure 5 shows the alternative of a Fibre Brag Grating (FBG) measuring principle with a FBG fibre 15 for combustion pressure measurement. The FBG fibre 15 is positioned centrally in a for example quartz body 16 that is retained in the sensor body 9.

Figure 6 shows the alternative of a Fabry-Perot measuring principle, where the light transmitted to the membrane 13 by optical fibre 1 is split into two beams by a dialectic mirror 17. This beam splitting by the dialectic mirror 17 results in different paths of interference causing a delay indicated by reference numeral 18, between the beam reflected by the dialectic mirror 17 and the beam reflected by the reflective surface of the membrane 13, which is positioned at a distance 19 of the dialectic mirror 17.

As should be understood Figures 5 and 6 are simplified representations, and it is clear that the Fibre Brag Coating, or the Fabry-Pérot measuring principles can also be applied to the outer edge temperature correction optical fibres in any of the afore described embodiments.

The same interchangeability of the previously described embodiments also applies to the connection of the optical fibres 1, 2, 3, 4 to any of the sensor bodies 9, or quartz body 16.

Accordingly there is disclosed a combustion pressure sensor comprises a sensor body 9, at least one first optical fibre 1, 2 inserted into the sensor body 9, and a resiliently deformable membrane 7; 13 attached to the sensor body 9. The at least one first optical fibre 1, 2 is arranged for allowing measuring of a pressure induced deflection of the resiliently deformable membrane 9. An end 25 of the at least one first optical fibre 1, 2 is connected to the sensor body 9 in a manner that withstands temperatures within a range of temperatures hot enough to regenerate soot depositions on the resiliently deformable membrane 7; 13, yet cool enough to prevent melting of the resiliently deformable membrane 7; 13. When included in an internal combustion engine, at least one such combustion pressure sensor is positioned with its resiliently deformable membrane 7; 13 in direct contact with a surrounding body 8 of an engine component for direct transfer of heat to the surrounding body 8 of the engine component, such as a cylinder head or fuel injector.

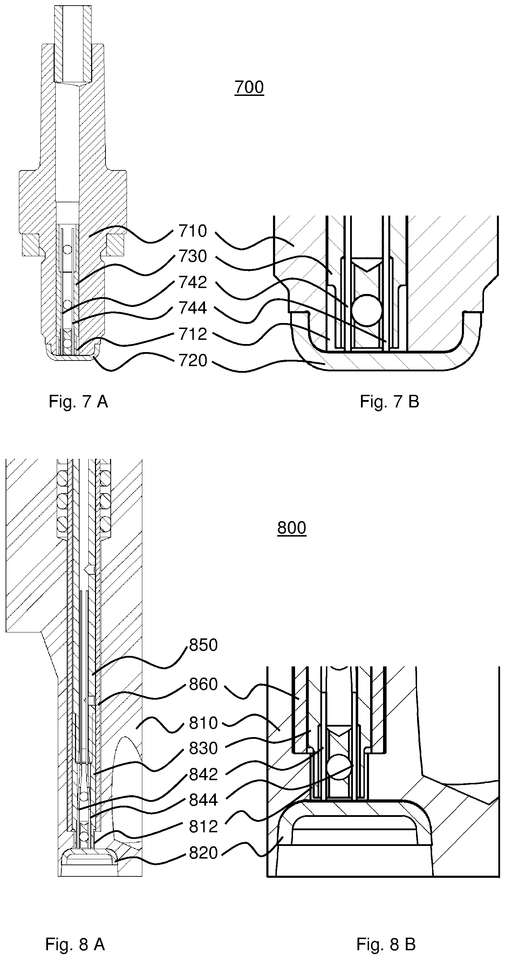

Figure 7A shows a first practical pressure sensor 700 and Figure 7 B shows a details of a distal end of the first practical pressure sensor 700. The first practical pressure sensor 700 comprises a sensor body 710, through which a bore is provided. In the bore, a ferrule 730 is provided. In this embodiment, a distal end of the ferrule 730 does not extend through the bore up to a distal end of the body 710. In another embodiment, both distal ends are provided on one line. The ends of a first fibre module 742 and a second fibre module 744 extend such that they are in the same plane at the distal end of the body 710. The first fibre module 742 and the second fibre module 744 may comprise one fibre, two fibres or more fibres, in accordance with embodiment discussed above.

At the distal end of the device body, a membrane 720 is provided. The membrane 720 has a D-shaped cross-section, with a substantially flat centre part and a surrounding circumferential part that having an orientation substantially perpendicular to the centre part. The transition between the centre part and the circumferential outer part is preferably provided in a bend rather than a sharp corner. In this embodiment, the membrane 720 is provided concavely in the sensor 700

The bend preferably has a substantially constant radius. In another embodiment, the bend has a substantially elliptical or parabolic shape, another shape, or a combination thereof. The distance between the distal end of the device body and/or distal ends of the fibre module is preferably in the order of 50 $\mu$m, between 20 $\mu$m and 70 $\mu$m. The properties of the membrane 720 are such that at a pressure of 350 bar, the deflection of the membrane is approximately between 7 $\mu$m and 10 $\mu$m.

In this embodiment, the ferrule 730 is narrower at the distal end compared to the rest of the ferrule 730. The narrowing is established by a step function in the outer diameter of the ferrule 730. The bore in the body 710 has a substantial constant cross-section, which results in an airgap between 712 the ferrule 730 and the device body 710, the airgap is meant for insulating the temperature in the inner heatshield formed by the distal end of the body 710 picking up the majority of the flux heat from the membrane and transporting it to the engine cooling.

Figure 8A shows a second practical pressure sensor 800 and Figure 8 B shows a details of a distal end of the first practical pressure sensor 800. The second practical pressure sensor 800 comprises a sensor body 810, through which a bore is provided. The sensor body 810 may be part of a larger entity, like a fuel injector for a Diesel engine.

In the bore, a first ferrule 830 is provided. In this embodiment, a distal end of the first ferrule 830 does not extend through the bore up to a distal end of the body 810. In another embodiment, both distal ends are provided on one line. The ends of a first fibre module 842 and a second fibre module 844 extend such that they are in the same plane at the distal end of the body 810. The first fibre module 842 and the second fibre module 844 may comprise one fibre, two fibres or more fibres, in accordance with embodiment discussed above.

At the distal end of the device body, a membrane 820 is provided. The membrane 820 has a D-shaped cross-section, with a substantially flat centre part and a surrounding circumferential part that having an orientation substantially perpendicular to the centre part. The transition between the centre part and the circumferential outer part is preferably provided in a bend rather than a sharp corner. In this embodiment, the membrane 820 is provided convexly in the sensor 800.

The bend preferably has a substantially constant radius. In another embodiment, the bend has a substantially elliptical or parabolic shape, another shape, or a combination thereof. The distance between the distal end of the device body and/or distal ends of the fibre module is preferably in the order of 50 $\mu$m, between 20 $\mu$m and 70 $\mu$m. The properties of the membrane 820 are such that at a pressure of 350 bar, the deflection of the membrane is approximately between 6 $\mu$m and 20 $\mu$m.

In this embodiment, the first ferrule 830 is narrower at the distal end compared to the rest of the first ferrule 830. The narrowing is established by a step function in the outer diameter of the first ferrule 830. The bore in the body 810 has a substantial constant cross-section, which results in an airgap 812 between the first ferrule 830 and the device body 810.

The second practical pressure sensor 800 further comprises a second ferrule 850. The second ferrule 850 partially overlaps with the first ferrule 830. In this embodiment, the first ferrule 830 is located at the outside at the overlapping part, as a mantle to the second ferrule 850. Around the ensemble of the first ferrule 830 and the second ferrule 850, an optional third ferrule 860 is provided. By providing multiple ferrules its possible to exactly place the distance between the fiber ends to the membrane and than fix this position to the 860 ferule witch than can be easy dismounted and mounted and coming back it its original position in a precise way.

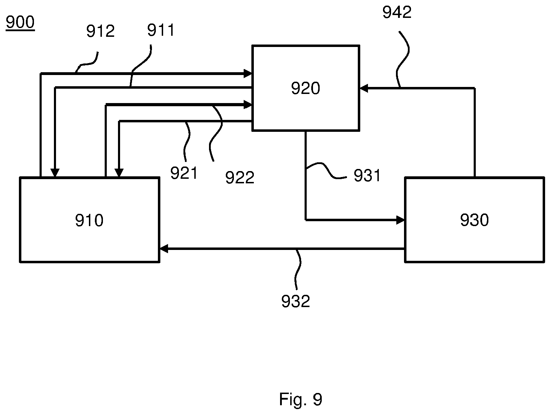

Figure 9 shows a motor management system 900, comprising at least one combustion pressure sensor 910 according to any of the abovementioned embodiments. The motor management system 900 further comprises a control module 920, arranged to receive an external signal 942 and arranged to send a control signal 931 to an internal combustion engine 930. The control module 920 is further arranged to send a first light beam 911 to the combustion pressure sensor 910 and to receive back a reflection 912 of at least part of the first light beam. The control module 920 is furthermore arranged to send a second light beam 921 to the combustion pressure sensor 910 and to receive back a reflection 922 of at least part of the second light beam. The combustion pressure sensor 910 is arranged to be exposed to a pressure in the combustion engine 930 via a conduit 932.

The external signal 942 may be based on data acquired from an internal combustion engine, wherein said data may comprise a combustion temperature, intake air temperature, oxygen level, fuel-to-air ratio, engine RPM, engine load, fuel tank level, intake air pressure, spark timing, throttle, engine stroke, crank angle, any other parameter or any combination thereof.

The control signal 931 may comprise a signal based on data acquired from one of the external signal 942, reflection 911 of the first light beam, reflection 922 of the second light beam, or any combination thereof. Herein, the control signal 931 is arranged to control the operation of the internal combustion engine 910 according to an optimization parameter, e.g. fuel efficiency or emissions. It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described.

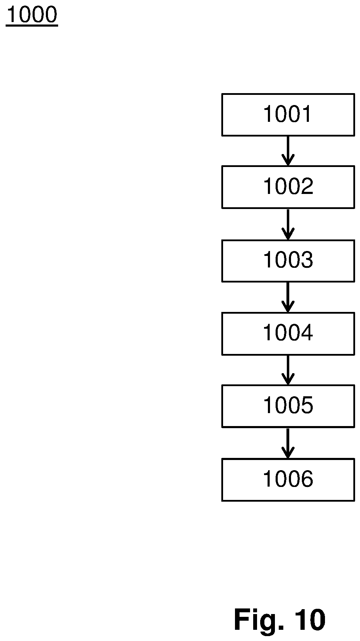

Fig. 10 shows a method 1000 of controlling operation of an internal combustion engine comprising a crank shaft, a piston and a cylinder, wherein the method comprises providing a combustible mixture in the cylinder in part 1001. The combustible mixtures comprises at least oxygen and a first combustible at a first mixture ratio. The procedure further comprises obtaining an annular position of the crank shaft in part 1002. Execution of this part triggers combustion of the mixture at a first annular position of the crank shaft in part 1003. In part 1004, a temperature of the combustible mixture in the cylinder is obtained during combustion. The obtained temperature is compared to a pre-determined range in part 1005. If the temperature is out of the range, at least one of the first mixture ratio and the first annular position of the crank shaft at which combustion is triggered is adjusted in part 1006.

The first combustible may be a spark-ignition type fuel, such as gasoline, LPG, methanol, ethanol, bioethanol, natural gas, hydrogen, nitromethane, any other spark-ignition type fuel, or any combination thereof. The first mixture comprises said first combustible and further comprises oxygen. The first mixture may optionally comprise recirculated exhaust gasses.

Obtaining an annular position of the crank shaft in part 1002 may be done using a crankshaft position sensor, such as a hall effect sensor, optical sensor, harmonic balancer or inductive sensor. This position may be a relative position or an absolute position.

The combustion of the mixture at a first annular position of the crank shaft in part 1003 can either be triggered by introducing a spark in the cylinder, using a spark plug. Alternatively, a second combustible mixture may be introduced in the cylinder, wherein said second combustible mixture is of a compressive ignition type, such as Diesel. Upon compression of the second combustible mixture, the second combustible mixture will ignite and act as a spark for the ignition of the first combustible mixture. More in general, the second combustible matter, injected after injection of the first combustible matter, executed self-combustion at a lower pressure than the first combustible matter.

The timing of the combustion of the combustible mixture can be controlled by adjusting at least one of the first mixture ratio, timing of the injection of the second combustible mixture, activation of a sparkplug or another combustion trigger.

Obtaining the temperature of the mixture in the cylinder during combustion in part 1004 may be done directly using a temperature sensor, or alternative the temperature may be estimated from different engine parameters. These different engine parameters comprise a pressure in the cylinder, and the volume occupied by the mixture in the cylinder, which can be derived from known cylinder parameters such as a bore and a stroke, and the crank angle which determines the position of a piston in the cylinder.

More specifically, the combustion pressure sensor discussed above may be used for determining the temperature in the cylinder during combustion. Either the deflection measured by the first fibre module or the second module is used, in combination with the volume occupied by the combustible mixture, and a pre-determined constant based on the content of the combustible mixture. Otherwise, a difference in deflection measured by the first fibre module and the second fibre module can be used to obtain the temperature in the cylinder. These methods may be used to determine a temperature during combustion, relative to a reference temperature.

The obtained temperature is compared to a pre-determined temperature range, wherein said temperature range is pre-determined to optimize for minimizing certain emissions, such as $NO_x$, $CH_4$, soot, particulate matter (PM), any other emission, or any combination thereof.

To control the temperature of a second combustion in the cylinder, the data obtained from a first combustion, which occurred earlier than the second combustion, is used. Then, in order to control the temperature, at least one of the air-to-fuel ratio of the combustible mixture, an amount of second combustible provided to the cylinder, the injection timing of one or more injections of the second combustible an duration of injection of the second combustible are adjusted. Any combination of said control parameters may be also be adjusted to control the temperature in the cylinder during combustion. This usage of data obtained from a previous combustion may form a closed-loop control system aimed at keeping the combustion temperature inside the pre-determined temperature range.

References to published material or sources of information contained in the text should not be construed as concession that this material or information was part of the common general knowledge in this country or abroad. Each document, reference or patent publication cited in this text should be read and considered by the reader as part of this text, and for reasons of conciseness the contents thereof is not repeated, duplicated or copied in this text. It will be clear to the skilled person that the invention is not limited to any embodiment herein described and that modifications are possible which may be considered within the scope of the appended claims.

Also kinematic inversions are considered inherently disclosed and can be within the scope of the invention. In the claims, any reference signs shall not be construed as limiting the claim. The terms 'comprise', 'comprising' and 'including' when used in this description or the appended claims should not be construed in an exclusive or exhaustive sense but rather in an inclusive sense. Thus expression as 'including' or 'comprising' as used herein does not exclude the presence of other elements, integers, additional structure or additional acts or steps in addition to those listed.

Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed.

The use of expressions like: "critical", "preferred", "especially preferred" etc. is not intended to limit the invention. To the extend that structure, material, or acts are considered to be essential they are inexpressively indicated as such. Additions, deletions, and modifications within the purview of the skilled person may generally be made without departing from the scope of the invention, as determined by the claims.

## Claims

1. Combustion pressure sensor comprising a sensor body (9, 710, 810), at least one first optical fibre module (1, 2, 3, 4, 742, 744, 842, 844) and at least one second optical fibre module (1, 2, 3, 4, 742, 744, 842, 844) inserted into the sensor body, and a resiliently deformable membrane (7, 13, 18, 720, 820) attached to the sensor body, the membrane having a reflective surface, wherein the at least one first optical fibre module (1, 2, 3, 4, 742, 744, 842, 844) is arranged for allowing measuring of a pressure induced deflection of the resiliently deformable membrane, wherein

   - the at least one first optical fibre module is configured to guide a light beam to the reflective surface and to guide the reflected light;
   - the at least one second optical fibre module is configured to guide a light beam to the reflective surface and to guide the reflected light;
   - the first optical fibre module is positioned centrally with respect to the resiliently deformable membrane;
   **characterised in that**
   - the at least one second optical fibre module is arranged for allowing detection of a temperature induced thermal expansion of the resiliently deformable membrane to enable temperature correction of pressure related values obtained by the at least one first optical fibre module;
- the second optical fibre module is positioned adjacent to an outer edge of the resiliently deformable membrane.

2. Combustion pressure sensor as in claim 1, wherein the resiliently deformable membrane (7, 13, 18, 720, 820) has a substantially flat central part and a peripheral part surrounding outer edge part having an orientation substantially perpendicular to the central part.

3. Combustion pressure sensor as in any of claims 1 or 2, wherein the end of the at least one first optical fibre module (1, 2, 3, 4, 742, 744, 842, 844) is connected to the sensor body (9, 710, 810) by at least one ferrule (30, 730, 780, 830,880), and wherein the combustion pressure sensor comprises a separation gap, arranged to provide a heat insulating separation between at least a part of the at least one ferrule and at least a part of the sensor body, wherein the separation gap is provided circumferentially around a proximal end of the ferrule.

4. Combustion pressure sensor as in claim 3, wherein the end of the at least one first optical fibre module (1, 2, 3, 4, 742, 744, 842, 844) is connected to the sensor body (9, 710, 810) by a pair of ferrules (30, 730, 780, 830,880) oppositely engaging a portion of the sensor body.

5. Combustion pressure sensor as in any of the previous claims, wherein a separation gap is provided between the first fibre module (1, 2, 3, 4, 742, 744, 842, 844) and the sensor body (9, 710, 810), wherein the separation gap is provided circumferentially around the first fibre module, wherein the material occupying the separation gap has a higher thermal resistance than the material comprised by the sensor body.

6. Internal combustion engine (930), including at least one combustion pressure sensor according to one of the preceding claims.

7. Internal combustion engine (930) as in claim 6, wherein the resiliently deformable membrane (7, 13, 18, 720, 820) is separated from a combustion chamber (5) of the internal combustion engine by a channel in the engine component, and wherein the channel has a length that is selected to be commensurate with the working temperature range of the resiliently deformable membrane.

8. Method of determining a temperature in a cylinder of a combustion engine, by means of a combustion pressure sensor according to any of the claims 1-5, comprising:

- determining a first deformation of the membrane (7, 13, 18, 720, 820) using at least part of a signal corresponding to a light beam received from the first fibre module (1, 2, 3, 4, 742, 744, 842, 844);
- determining a second deformation of the membrane using at least part of a signal corresponding to a light beam received from the second fibre module (1, 2, 3, 4, 742, 744, 842, 844); and
- comparing the first deformation and the second deformation;
- based on the comparing, determining at least one of an effect of temperature on the deformation and a pressure in the cylinder;
- determining, if an effect of temperature has been determined, the temperature in the cylinder based on the effect of temperature on the deformation; and
- obtaining, if pressure in the cylinder has been determined, the temperature inside the cylinder by estimating the temperature using the ideal gas equation:

$$\frac{P \cdot V}{T} = k$$

9. Computer software, comprising computer executable code that enables a computer, with the code loaded in the memory of the computer, to execute the method according to claim 8.

10. Method of controlling operation of an internal combustion engine (930) comprising a crank shaft and a cylinder (5), the method comprising:

- Providing a combustible mixture in the cylinder (5), wherein the combustible mixture comprises at least oxygen and a first combustible at a first mixture ratio;
- Obtaining an annular position of the crank shaft;
- Triggering combustion of the combustible mixture at a desired first annular position of the crank shaft;
- Obtaining a temperature of the combustible mixture in the cylinder during combustion using the method according to claim 8;
- Comparing the temperature to a pre-determined temperature range;
- If the temperature if outside of the pre-determined range, adjust at least one of:
- the first mixture ratio; and
- desired first annular position of the crank shaft at which the ignition of the combustible mixture is triggered.

11. Method according to claim 10, further comprising at least one of:

- delaying triggering of the combustion in a subsequent combustion stroke if the obtained temperature is above the pre-determined temperature range; and
- bringing forward triggering of the combustion in a subsequent combustion stroke if the obtained temperature is below the pre-determined temperature range.

**Patentansprüche**

1. Verbrennungsdrucksensor mit einem Sensorkörper (9, 710, 810), wenigstens einem ersten Lichtleitermodul (1, 2, 3, 4, 742, 744, 842, 844) und wenigstens einem zweiten Lichtleitermodul (1, 2, 3, 4, 742, 744, 842, 844), die in den Sensorkörper eingesetzt sind, und einer elastisch verformbaren Membran (7, 13, 18, 720, 820), die an dem Sensorkörper befestigt ist, wobei die Membran eine reflektierende Oberfläche aufweist, wobei das wenigstens eine erste Lichtleitermodul (1, 2, 3, 4, 742, 744, 842, 844) so angeordnet ist, dass es die Messung einer druckinduzierten Auslenkung der elastisch verformbaren Membran ermöglicht, wobei

- das wenigstens eine erste Lichtleitermodul so ausgelegt ist, dass es einen Lichtstrahl zur reflektierenden Oberfläche leitet und das reflektierte Licht leitet;
- das wenigstens eine zweite Lichtleitermodul so ausgelegt ist, dass es einen Lichtstrahl zur reflektierenden Oberfläche leitet und das reflektierte Licht leitet;
- das erste Lichtleitermodul mittig zu der elastisch verformbaren Membran positioniert ist;
**dadurch gekennzeichnet, dass**
das wenigstens eine zweite Lichtleitermodul so angeordnet ist, dass es die Erfassung einer temperaturinduzierten Wärmeausdehnung der elastisch verformbaren Membran ermöglicht, um eine Temperaturkorrektur der von dem wenigstens einen ersten Lichtleitermodul erhaltenen druckbezogenen Werte zu ermöglichen; das zweite Lichtleitermodul benachbart zu einer Außenkante der elastisch verformbaren Membran positioniert ist.

2. Verbrennungsdrucksensor nach Anspruch 1, wobei die elastisch verformbare Membran (7, 13, 18, 720, 820) einen im Wesentlichen flachen zentralen Teil und einen peripheren Teil aufweist, der einen Außenkantenteil umgibt, der eine Ausrichtung im Wesentlichen senkrecht zu dem zentralen Teil aufweist.

3. Verbrennungsdrucksensor nach einem der Ansprüche 1 oder 2, wobei das Ende des wenigstens einen ersten Lichtleitermoduls (1, 2, 3, 4, 742, 744, 842, 844) mit dem Sensorkörper (9, 710, 810) durch wenigstens eine Aderendhülse (30, 730, 780, 830, 880) verbunden ist, und wobei der Verbrennungsdrucksensor einen Trennungsspalt umfasst, der so angeordnet ist, dass er eine wärmeisolierende Trennung zwischen wenigstens einem Teil der wenigstens einen Aderendhülse und wenigstens einem Teil des Sensorkörpers bereitstellt, wobei der Trennungsspalt in Umfangsrichtung um ein proximales Ende der Aderendhülse herum bereitgestellt wird.

4. Verbrennungsdrucksensor nach Anspruch 3, wobei das Ende des wenigstens einen ersten Lichtleitermoduls (1, 2, 3, 4, 742, 744, 842, 844) mit dem Sensorkörper (9, 710, 810) durch ein Paar von Aderendhülsen (30, 730, 780, 830, 880) verbunden ist, die gegenüberliegend in einen Abschnitt des Sensorkörpers eingreifen.

5. Verbrennungsdrucksensor nach einem der vorhergehenden Ansprüche, wobei zwischen dem ersten Lichtleitermodul (1, 2, 3, 4, 742, 744, 842, 844) und dem Sensorkörper (9, 710, 810) ein Trennungsspalt vorgesehen ist, wobei der Trennungsspalt in Umfangsrichtung um das erste Lichtleitermodul vorgesehen ist, wobei das den Trennungsspalt einnehmende Material einen höheren Wärmewiderstand aufweist als das vom Sensorkörper umfasste Material.

6. Verbrennungsmotor (930), mit wenigstens einem Verbrennungsdrucksensor nach einem der vorhergehenden Ansprüche.

7. Verbrennungsmotor (930) nach Anspruch 6, wobei die elastisch verformbare Membran (7, 13, 18, 720, 820) von einer Brennkammer (5) des Verbrennungsmotors durch einen Kanal in der Motorkomponente getrennt ist, und wobei der Kanal eine Länge aufweist, die so ausgewählt ist, dass sie dem Arbeitstemperaturbereich der elastisch verformbaren Membran entspricht.

8. Verfahren zur Bestimmung einer Temperatur in einem Zylinder eines Verbrennungsmotors mittels eines Verbrennungsdrucksensors nach einem der Ansprüche 1 bis 5, umfassend:

- Bestimmung einer ersten Verformung der Membran (7, 13, 18, 720, 820) unter Verwendung wenigstens eines Teils eines Signals, das einem von dem ersten Lichtleitermodul (1, 2, 3, 4, 742, 744, 842, 844) empfangenen Lichtstrahl entspricht;

- Bestimmung einer zweiten Verformung der Membran unter Verwendung wenigstens eines Teils eines Signals, das einem von dem zweiten Lichtleitermodul (1, 2, 3, 4, 742, 744, 842, 844) empfangenen Lichtstrahl entspricht; und
- Vergleichen der ersten Verformung und der zweiten Verformung;
- basierend auf dem Vergleich, Bestimmen von wenigstens einer der Temperaturauswirkungen auf die Verformung und eines Drucks im Zylinder;
- Bestimmung der Temperatur im Zylinder basierend auf der Auswirkung der Temperatur auf die Verformung, wenn eine Temperaturauswirkung bestimmt wurde; und
- wenn der Druck im Zylinder bestimmt wurde, Erhalten der Temperatur im Inneren des Zylinders durch Abschätzung der Temperatur unter Verwendung der idealen Gasgleichung:

$$\frac{P \cdot V}{T} = k$$

9. Computersoftware, umfassend einen computerausführbaren Code, der es einem Computer ermöglicht, mit dem in den Speicher des Computers geladenen Code das Verfahren nach Anspruch 8 auszuführen.

10. Verfahren zum Steuern des Betriebs eines Verbrennungsmotors (930) mit einer Kurbelwelle und einem Zylinder (5), wobei das Verfahren umfasst:

- Bereitstellen eines brennbaren Gemisches im Zylinder (5), wobei das brennbare Gemisch wenigstens Sauerstoff und einen ersten Brennstoff in einem ersten Mischungsverhältnis umfasst;
- Erhalten einer ringförmigen Position der Kurbelwelle;
- Auslösen der Verbrennung des brennbaren Gemisches bei einer gewünschten ersten ringförmigen Position der Kurbelwelle;
- Erhalten einer Temperatur des brennbaren Gemisches im Zylinder während der Verbrennung nach dem Verfahren gemäß Anspruch 8;
- Vergleichen der Temperatur mit einem vorbestimmten Temperaturbereich; wenn die Temperatur außerhalb des vorbestimmten Bereichs liegt, Einstellen von wenigstens einem von:
- das erste Mischungsverhältnis; und
- der gewünschten ersten ringförmigen Position der Kurbelwelle, bei der die Zündung des brennbaren Gemisches ausgelöst wird.

11. Verfahren nach Anspruch 10, ferner umfassend wenigstens eines von:

- Verzögern des Auslösens der Verbrennung in einem nachfolgenden Verbrennungstakt, wenn die erhaltene Temperatur über dem vorbestimmten Temperaturbereich liegt; und
- Vorziehen der Auslösung der Verbrennung in einem nachfolgenden Verbrennungstakt, wenn die erhaltene Temperatur unterhalb des vorgegebenen Temperaturbereichs liegt.

## Revendications

1. Capteur de pression de combustion comprenant un corps de capteur (9, 710, 810), au moins un premier module de fibres optiques (1, 2, 3, 4, 742, 744, 842, 844) et au moins un second module de fibres optiques (1, 2, 3, 4, 742, 744, 842, 844) insérés dans le corps du capteur, et une membrane élastiquement déformable (7, 13, 18, 720, 820) fixée au corps du capteur, la membrane ayant une surface réfléchissante, dans lequel le au moins un premier module de fibres optiques (1, 2, 3, 4, 742, 744, 842, 844) est agencé pour permettre la mesure d'un fléchissement induit par la pression de la membrane élastiquement déformable, dans lequel

- le au moins un premier module de fibres optiques est configuré pour guider un faisceau lumineux vers la surface réfléchissante et pour guider la lumière réfléchie;
- le au moins un second module de fibres optiques est configuré pour guider un faisceau lumineux vers la surface réfléchissante et pour guider la lumière réfléchie;
- le premier module de fibres optiques est positionné de manière centrale par rapport à la membrane élastiquement déformable; **caractérisé en ce que**
- le au moins un second module de fibres optiques est agencé pour permettre la détection d'une dilatation thermique induite par la température de la membrane élastiquement déformable pour permettre une correction de température de valeurs liées à la pression obtenues par le au moins un premier module de fibres optiques;
- le second module de fibres optiques est positionné de manière adjacente à un bord externe de la membrane élastiquement déformable.

2. Capteur de pression de combustion selon la revendication 1, dans lequel la membrane élastiquement déformable (7, 13, 18, 720, 820) a une partie centrale sensiblement plate et une partie périphérique entourant la partie de bord externe ayant une orientation sensiblement perpendiculaire à la partie centrale.

3. Capteur de pression de combustion selon l'une quelconque des revendications 1 ou 2, dans lequel l'extrémité du au moins un premier module de fibres optiques (1, 2, 3, 4, 742, 744, 842, 844) est reliée au corps de capteur (9, 710, 810) par au moins une virole (30, 730, 780, 830, 880), et dans lequel le capteur de pression de combustion comprend un espace de séparation, agencé pour fournir une séparation d'isolation thermique entre au moins une partie de la au moins une virole et au moins une partie du corps de capteur, dans lequel l'espace de séparation est prévu suivant la circonférence autour d'une extrémité proximale de la virole.

4. Capteur de pression de combustion selon la revendication 3, dans lequel l'extrémité du au moins un premier module de fibres optiques (1, 2, 3, 4, 742, 744, 842, 844) est reliée au corps de capteur (9, 710, 810) par une paire de viroles (30, 730, 780, 830, 880) engageant de manière opposée une partie du corps du capteur.

5. Capteur de pression de combustion selon l'une quelconque des revendications précédentes, dans lequel un espace de séparation est prévu entre le premier module de fibres (1, 2, 3, 4, 742, 744, 842, 844) et le corps de capteur (9, 710, 810), dans lequel l'espace de séparation est prévu suivant la circonférence autour du premier module de fibres, dans lequel le matériau occupant l'espace de séparation a une résistance thermique plus élevée que le matériau compris par le corps de capteur.

6. Moteur à combustion interne (930), incluant au moins un capteur de pression de combustion selon l'une des revendications précédentes.

7. Moteur à combustion interne (930) selon la revendication 6, dans lequel la membrane élastiquement déformable (7, 13, 18, 720, 820) est séparée d'une chambre de combustion (5) du moteur à combustion interne par un canal dans le composant de moteur, et dans lequel le canal a une longueur qui est choisie pour être proportionnée à la plage de température de travail de la membrane élastiquement déformable.

8. Procédé de détermination d'une température dans un cylindre d'un moteur à combustion, au moyen d'un capteur de pression de combustion selon l'une quelconque des revendications 1 à 5, comprenant:

   - la détermination d'une première déformation de la membrane (7, 13, 18, 720, 820) en utilisant au moins une partie d'un signal correspondant à un faisceau lumineux reçu du premier module de fibres (1, 2, 3, 4, 742, 744, 842, 844);
   - la détermination d'une seconde déformation de la membrane en utilisant au moins une partie d'un signal correspondant à un faisceau lumineux reçu du second module de fibres (1, 2, 3, 4, 742, 744, 842, 844); et
   - la comparaison de la première déformation et de la seconde déformation;
   - sur la base de la comparaison, la détermination d'au moins l'un d'un effet de la température sur la déformation et d'une pression dans le cylindre;
   - la détermination, si un effet de la température a été déterminé, de la température dans le cylindre sur la base de l'effet de la température sur la déformation; et
   - l'obtention, si la pression dans le cylindre a été déterminée, de la température à l'intérieur du cylindre en estimant la température à l'aide de l'équation des gaz parfaits:

$$\frac{P \cdot V}{T} = k$$

9. Logiciel informatique, comprenant un code exécutable par ordinateur qui permet à un ordinateur, avec le code chargé dans la mémoire de l'ordinateur, d'exécuter le procédé selon la revendication 8.

10. Procédé de commande du fonctionnement d'un moteur à combustion interne (930) comprenant un vilebrequin et un cylindre (5), le procédé comprenant:

   - la fourniture d'un mélange combustible dans le cylindre (5), dans lequel le mélange combustible comprend au moins de l'oxygène et un premier combustible à un premier rapport de mélange;
   - l'obtention d'une position annulaire du vilebrequin;
   - le déclenchement de la combustion du mélange combustible à une première position annulaire souhaitée du vilebrequin;
   - l'obtention d'une température du mélange combustible dans le cylindre pendant la combustion en utilisant le procédé selon la revendication 8;
   - la comparaison de la température à une plage de température prédéterminée;
   - si la température est en dehors de la plage prédéterminée, l'ajustement d'au moins l'un de:

      - le premier rapport de mélange; et
      - la première position annulaire souhaitée du vilebrequin à laquelle l'allumage du mélange combustible est déclenché.

11. Procédé selon la revendication 10, comprenant en outre au moins l'un de:

- le retard du déclenchement de la combustion dans une course de combustion ultérieure si la température obtenue est supérieure à la plage de température prédéterminée; et
- l'avancement du déclenchement de la combustion dans une course de combustion ultérieure si la température obtenue est inférieure à la plage de température prédéterminée.

Fig 1

Fig 3

Fig 2

Fig 4

Fig 6

9
1
13
17

18
19

Fig 5

9
16
15

_700_

710
730
742
744
712
720

Fig. 7 A

Fig. 7 B

_800_

850
860
810
830
842
844
812
820

Fig. 8 A

Fig. 8 B

900

912    911                                    942

921    922         920

931

910                                          930

932

Fig. 9

1000

```
┌──────────┐
│   1001   │
└──────────┘
     │
     ▼
┌──────────┐
│   1002   │
└──────────┘
     │
     ▼
┌──────────┐
│   1003   │
└──────────┘
     │
     ▼
┌──────────┐
│   1004   │
└──────────┘
     │
     ▼
┌──────────┐
│   1005   │
└──────────┘
     │
     ▼
┌──────────┐
│   1006   │
└──────────┘
```

**Fig. 10**

**EP 3 535 556 B1**

**Patent documents cited in the description**

- US 6131465 A
- US 5146083 A